Europäisches Patentamt

**(19)** European Patent Office

Office européen des brevets

**(11)** Publication number:

**0 225 119**
**A2**

**(12)** # EUROPEAN PATENT APPLICATION

**(21)** Application number: **86309032.0**

**(22)** Date of filing: **19.11.86**

**(51)** Int. Cl.⁴: **A 21 C 7/02**

**(30)** Priority: **28.11.85 GB 8529347**

**(43)** Date of publication of application:
**10.06.87 Bulletin 87/24**

**(84)** Designated Contracting States:
**DE ES IT NL SE**

**(71)** Applicant: **BAKER PERKINS PLC**
**Westfield Road**
**Peterborough Cambridgeshire PE3 6TA(GB)**

**(72)** Inventor: **Salter, Keith**
**36 Helpston Road Ailsworth**
**Peterborough Cambridgeshire(GB)**

**(72)** Inventor: **Andrews, Graham John**
**47 Werrington Park Avenue**
**Peterborough Cambridgeshire PE4 6RG(GB)**

**(74)** Representative: **Boutland, John Anthony**
**8, Heatherstone Avenue**
**Hythe Southampton SO4 5LQ(GB)**

**(54)** Improvements in or relating to dough moulding machines.

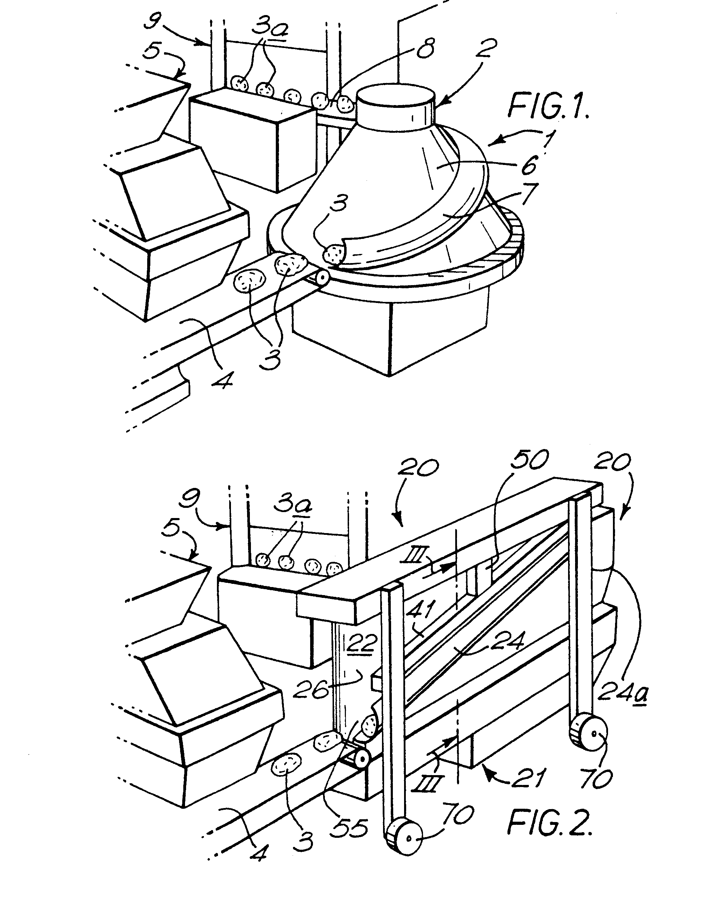

**(57)** Referring to Figure 2, a dough moulding machine 21 comprises a surface 22 movable laterally in a vertical plane, and a conduit or trough 24 cooperating with the movable surface 22 so as to define a moulding channel for the dough pieces 3.

The movable surface 22 is provided with at least one run of an endless belt conveyor 26, the bights of the belt extending around end rollers rotatable about vertical axes.

The trough 24 is inclined upwardly from the horizontal.

FIG.2.

EP 0 225 119 A2

"Improvements in or relating to Dough Moulding Machines"

BACKGROUND TO THE INVENTION

This invention relates to dough moulding machines, and is particularly concerned with machines for moulding dough pieces as received from dividers prior to passage to provers.

Such a dough moulding machine is also commonly known as a hander-up, a rounder, or a conical or cone moulder, whereby, using a rotating surface and fixed trough, a lump of dough is worked into a substantially spherical shape.

Such dough moulding machines are expensive and their manufacture involves production problems, for example, in providing working clearances between the rotating surfaces and their associated troughs but avoiding chipping of the dough pieces. Furthermore, the machines require frequent cleaning in order to remove particles of dough adhering to surface parts of the machines.

In addition, problems are introduced by the fixed troughs, as they do not easily accommodate different sizes and weights of dough pieces. Consequently, when moulding tougher doughs, such as used in the manufacture of brown bread, the desired spherically-shaped dough pieces are not produced.

Although a trough can be replaced by one more suitable for a particular production run, it cannot be changed easily. Accordingly, there is a temptation to leave an existing trough in place and accept the consequences.

OBJECTS OF THE INVENTION

One object of the present invention is to provide a dough moulding machine wherein the above-mentioned problems are at least alleviated.

Another object of the present invention is to provide a dough moulding machine which is of simple construction, easily adjustable and readily maintained.

SUMMARY OF THE INVENTION

According to the invention, a dough moulding machine comprises a surface movable laterally in a substantially vertical plane, and trough means cooperating with the movable surface so as to define at least one moulding channel for dough pieces.

The movable surface preferably comprises an endless belt.

The means cooperable with the movable surface is preferably movable relative to the surface, so as to adjust the cross-section of the moulding channel.

BRIEF DESCRIPTION OF THE DRAWINGS

An embodiment of the invention will now be described by way of example only, with reference to the accompanying drawings, wherein :-

Figure 1 is a view, in perspective, of a traditional installation using a well-known form of dough moulding machine,

Figure 2 is a similar view of the installation but with the dough moulding machine replaced by one according to the present invention,

Figure 3 is a fragmentary view, in perspective, taken on the lines III - III of Figure 2, but to an enlarged scale,

Figures 4 and 5 illustrate the paths of travel taken by a dough piece during moulding, and

Figures 6, 7 and 8 are views, in perspective, illustrating various forms of air jet systems which may be used by the invention.

In the figures, like reference numerals refer to like components and features.

DETAILED DESCRIPTION OF THE PREFERRED EMBODIMENT

With reference first to Figure 1, a traditional bread loaf making installation 1 employs a conical dough moulding machine 2. Dough pieces 3 are discharged from a conveyor belt 4 associated with a dough divider 5 and fed at regular intervals to the bottom of the machine 2. As a conical table 6 of the machine 2 revolves, the dough pieces 3 are carried up within a moulding trough 7 whereby a screw-like action is imparted to each dough piece. The resultant rounding action produces generally tight dough pieces. After moulding, the now substantially spherical dough pieces 3a are conveyed, by an endless conveyor 8, to a proving chamber 9.

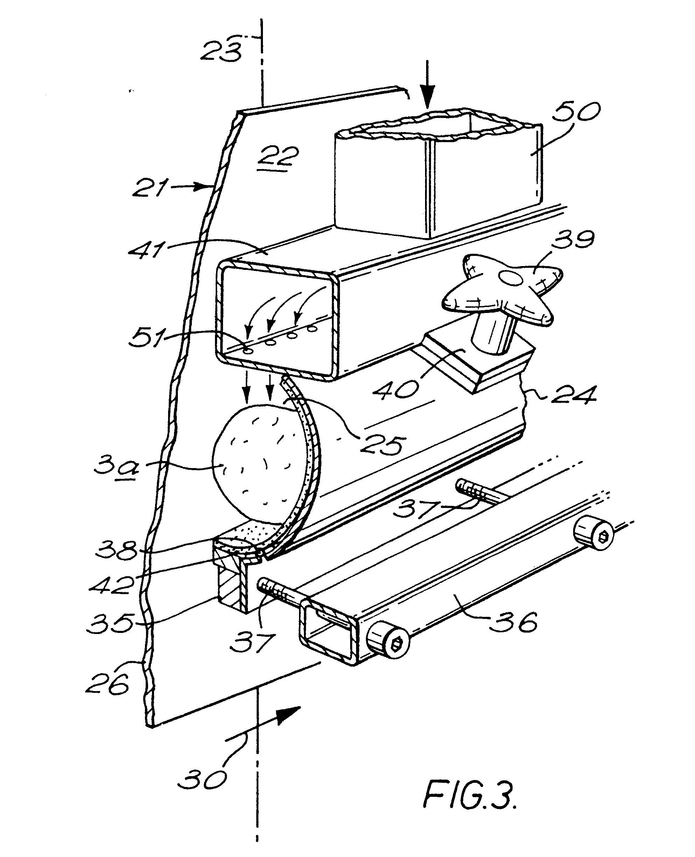

Referring now to Figures 2, 3 and 4, a bread loaf making installation 20 (Figure 2) is provided with a dough moulding machine 21 according to the present invention. The machine 21 comprises a surface 22 movable laterally in a vertical plane 23, (Figure 3), and in a substantially horizontal direction, and structural means provided by a conduit or trough 24 cooperating with the movable surface 22 so as to define a moulding channel 25 for the dough pieces 3.

The machine 21 is mounted on castors 70, and is provided with a substantial ground clearance. (See Figure 2).

The movable surface 22, which is disposed in the vertical plane 23, is defined by one run of an endless belt conveyor 26, the bights of the belt extending around driving and driven rollers 27, 28 respectively. Variable speed driving means 29 is employed to rotate the roller 27. The direction of travel of the belt 26 is indicated by arrow 30.

Although the surface 22 of this example is disposed in the vertical plane 23, some deviation from the vertical can be tolerated, for example, $5^{o}$.

The trough 24 is inclined upwardly from the horizontal, (see Figure 2), and is of curved cross-section. The trough 24 extends for substantially the whole of the belt surface 22.

The trough 24, which is provided with a felt liner 42, is secured to a frame structure 35 which is carried by a stationary box-section member 36 by support and adjusting screws 37. Rotation of the screws 37 results in the structure 35, and hence the trough 24, being moved bodily towards and away from the belt 26, in order to maintain light rubbing contact between the belt surface 22 and the felt liner 42.

The trough 24 is movably connected to the frame structure 35 by a hinge 38 so as to be pivotable, relative to the belt 26.

Pivotable movement of the trough 24 about the hinge 38 is carried out by adjusting knobs 39 carried by brackets 40 adjacent the ends of the trough, and secured to an air duct 41. The air duct 41 is disposed above and extends along with, the moulding channel 25.

Thus the screws 37 can be used to adjust contact between the felt liner 42 and moving belt surface 22, and the knobs 39 can be used to vary the cross-sectional area of the moulding channel 25.

Accordingly, dough pieces ranging from 100 to 1200 grammes in weight may be moulded to subsequently produce bread loaves or rolls.

For dough pieces heavier than 1200 grammes, an alternative moulding trough of appropriate shape and volume may be employed.

Hinging of the trough 24 also allows the trough to be swung away, well clear of the belt 26, for cleaning and/or felt liner replacement, as well as easy access in the event of dough pieces jamming.

Keeping a light rubbing contact between the felt liner 42 and the belt surface 22 provides a good seal which prevents "chipping" of the dough pieces during moulding.

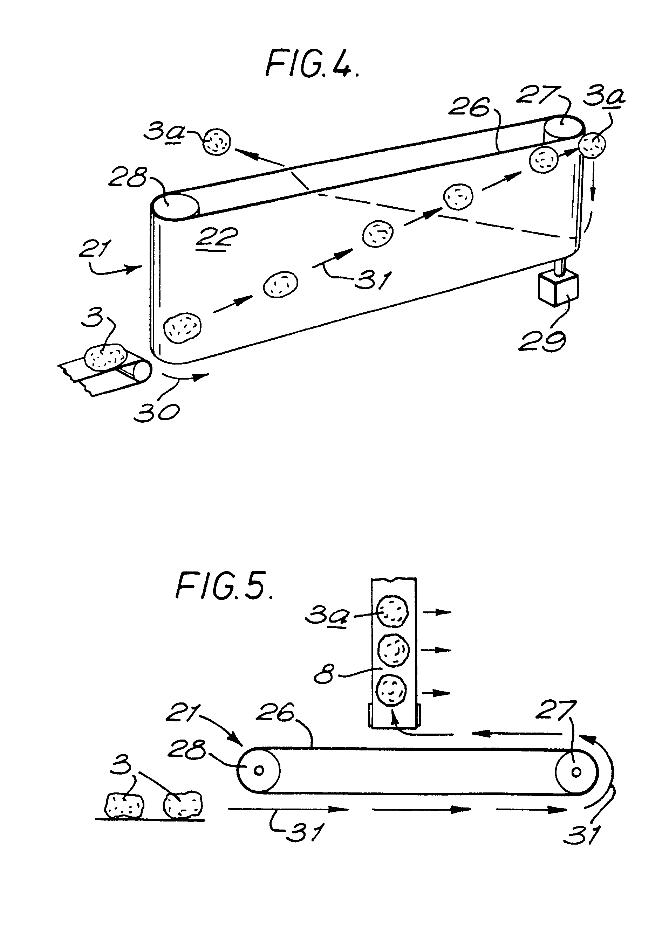

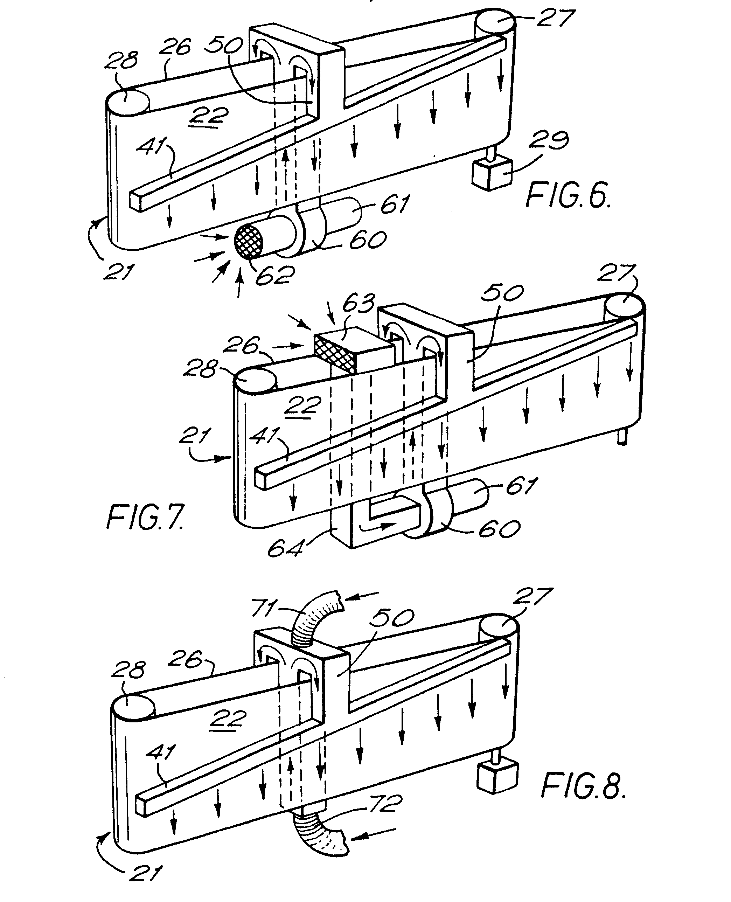

Both runs of the endless belt 26 are employable for moulding, the trough means then further comprising a second or additional trough, (not shown), disposed in an oppositely- inclined direction to the trough 24. A transfer chute 24a positioned at the outlet end of the belt 26 enables the dough pieces 3 to be discharged by gravity to the inlet end of the additional trough 24 for further moulding by contact with the opposite run of the belt 26. (The paths of dough piece travel are illustrated by arrows 31 in Figures 4 and 5).

Pressurised air is supplied to the duct 41 by way of an inlet feed 50 (Figure 3). The air enters the moulding channel 25 by way of a series of spaced-apart holes 51 formed in the base of the duct 41. The downwardly discharged air flow is used to impart a dry surface to each dough piece as it is conveyed along the moulding channel 25 by contact with the belt 26. This "skinning" action tends to prevent adhesion of the dough pieces to the parts of the machine 21 with which it comes into contact, as well as preventing "chipping" of dough, and therefore loss of scaling accuracy.

In operation, dough pieces 3 are discharged, in spaced-apart relationship, from the dough divider 5 into an inlet 55 of the machine 21. The dough pieces are then conveyed along the upwardly-inclined moulding channel 25 by the substantially horizontally moving belt 26, being rotated thereby during this passage, so as to impart a "balling" or "rounding" action to the pieces. At the end of the moulding channel 25 the dough pieces cascade or spiral, substantially under control, by way of the transfer chute 24a, to enter the further, upwardly-inclined trough 24, disposed on the opposite side of the belt 26. Thus the dough pieces are "rounded" on both sides of the belt 26.

The dough pieces 3a are next discharged on to a conveyor, (as in Figure 1), which transports the pieces to the prover 9.

The moulding action, which is beneficially contributed to by gravitational forces, rotates the dough pieces so that their surfaces are stretched whereby smooth skins are formed. These smooth, unbroken skins improve the quality of the final moulds, allowing the dough to stretch uniformily during sheeting.

Figures 6, 7 and 8 illustrate various arrangements for supplying clean air to the duct 41.

In Figure 6, a fan 60 driven by a motor 61 is used to supply the air. A filter 62 is fitted to the fan inlet.

In Figure 7, a filter 63 is disposed above the belt 26 and is connected to the fan 60, (which is disposed below the belt), by a duct 64.

In Figure 8, ducts 71, 72 connected to external sources, (not shown), are used to supply the air to the ducts 41.

Advantages of the invention include :-

1. Feed and delivery heights can be suited to match installations.

2) Feed and delivery points can be accommodated at any point around the machine 21.

3. The moulding length can be extended (by increasing the length of belt 26), or reduced (by varying the take-off point of the dough pieces 3a).

4.  The large ground clearance (see Figure 2) allows effective cleaning beneath the machine 21.

5.  All product contact areas are removable for cleaning.

6.  Removal of the trough liner 42 is possible by the operator of the machine.

7.  The machine may be mounted on castors 70 (see Figure 2) for manoeuvreability.

Whilst the present invention is preferably directed to a handing-up operation between dividing and first proving in the production of bread loaves, the apparatus may be employed in the manufacture of bread rolls.

C L A I M S

1. A dough moulding machine characterised in that the machine (21) comprises a surface (22) movable laterally in a substantially vertical plane (23), and means (24) cooperating with the movable surface (22) so as to define at least one moulding channel (25) for dough pieces (3).

2. A dough moulding machine as claimed in Claim 1, characterised in that the movable surface (22) comprises an endless belt (26).

3. A dough moulding machine as claimed in Claim 1 or 2, characterised in that the means (24) cooperable with the movable surface (22) is movable relative to said surface (22), so as to adjust the cross-section of the moulding channel (25).

4. A dough moulding machine as claimed in Claim 2 or 3, characterised in that both runs of the endless belt (26) are employable for dough moulding.

5. A dough moulding machine as claimed in any one of Claims 1 to 4, characterised in that the moulding channel (25) is pivotable relative to the movable surface (22).

6. A dough moulding machine as claimed in any one of Claims 1 to 5, characterised in that means (51, 50, 41) are provided for subjecting dough pieces (3a) to a drying flow of pressurised air during moulding.

7. A dough moulding machine as claimed in Claim 6, characterised in that the drying flow of pressurised air is discharge downwardly from holes (51) formed in duct means (41) disposed above and extending along with the moulding channel (25).

Ref: 1079 EPO

1/4

FIG.1.

FIG.2.

0225119

FIG.3.

0225119

3/4

FIG.4.

FIG.5.

4/4

FIG.6.

FIG.7.

FIG.8.

0225119